# EUROPEAN PATENT APPLICATION

(11) **EP 4 809 876 A1**
(43) Date of publication of application: **23.09.2026**
(21) Application number: 25165089.1
(22) Date of filing: 20.03.2025
(51) Int. Cl.: A47J 31/42, A23F 5/04

(54) **A COFFEE PREPARATION APPARATUS, A METHOD, AND A COFFEE MACHINE**

(71) Applicant: Tosco SA, 1800 Vevey (CH)
(72) Inventor: BOTELHO DIREITO, José, 2000 Neuchâtel (CH); LEVIN, James, 1800 Vevey (CH)
(74) Representative: reuteler & cie SA

(57) **Abstract**

A **coffee preparation apparatus** (1) comprising:
a receiving section (3) configured to receive coarse pre-ground (PG) green coffee beans (50a);
a roasting section (4) comprising a roasting chamber (10) and an air circulator (12) configured to drive heated air, configured to torrefy the PG beans (50a) using the heated air within the roasting chamber (10);
a grinding section (5) configured to grind the torrefied PG beans (50c); and
a degassing section (6) comprising a vacuum pump (30) configured to remove released gases from the ground torrefied PG beans (50e).

## Description

### Field

The present invention relates to a coffee preparation apparatus, in particular a coffee preparation apparatus for a single or multiple serves for a domestic use, or for use in catering such as restaurants, bars and hotels.

### Background

Many consumers of coffee purchase roasted ground coffee, which is processed from green beans to roasted ground coffee in an industrial setting. Some consumers purchase roasted coffee beans and they grind the roasted beans and brew coffee in a domestic setting.

It is also known to purchase green coffee beans and to roast and grind the roasted coffee beans in a domestic setting. The roasting of green beans close to consumption allows the consumer to choose the degree of torrefaction, and roasting just before consumption also reduces the degree of oxidation of the roasted coffee prior to consumption.

However, achieving consistent roast quality can be challenging with domestic machines. Further, after roasting, a resting period is preferable to improve flavor for brewing espresso since the roasted coffee beans release carbon dioxide and other volatile gases. The resting period is ideally from 2 to 7 days. Excess carbon dioxide and volatile gases can interfere with the brewing process, leading to inconsistent extraction, excessive bubbling, and a cup with muted or imbalanced flavors.

Small batch roasting can make it difficult to achieve consistency, as minor variations in heat distribution and timing can significantly affect the final result. Additionally, the roasting and resting period is time-consuming. Furthermore, the roasting process requires regular maintenance of the machine to prevent chaff buildup, which can hinder performance or may even pose a fire hazard if neglected.

### Summary

In view of the foregoing, it is an object of this invention to an apparatus for preparing ground coffee for brewing coffee at home which is time efficient and allows to prepare coffee with optimal flavor.

It is advantageous to provide a coffee preparation apparatus that may reduce coffee preparation time for brewing.

Objects of this invention have been achieved by providing an apparatus according to claim 1 a method for coffee preparation according to claim 12 and a coffee machine according to claim 15. Dependent claims set forth various advantageous features of embodiments of the invention.

Disclosed herein is a coffee preparation apparatus comprising:
- a receiving section configured to receive coarse pre-ground (PG) green coffee beans;
- a roasting section comprising a roasting chamber and an air circulator configured to drive heated air, configured to torrefy the PG beans using the heated air within the roasting chamber;
- a grinding section configured to grind the torrefied PG beans; and
- a degassing section comprising a vacuum pump configured to remove released gases from the ground torrefied PG beans.

In an advantageous embodiment, a particle size of the coarse PG beans ranges from 1,000 to 2,700 microns and a particle size of the ground torrefied PG beans ranges from 100 to 1,600 microns.

In an advantageous embodiment, the roasting section further comprises a roasting chamber outlet valve, a coffee collector cyclone, and a chaff collector cyclone, wherein the roasting chamber outlet valve is configured to control a transfer of the torrefied PG beans into the coffee collector cyclone and a transfer of by-product of the roasting section into the chaff collector cyclone, wherein the by-product comprises at least one of a portion of the heated air, released gases from the PG beans, or chaff separated from the PG beans.

In an advantageous embodiment, the air circulator is configured to lift the by-product of the roasting section into the chaff collector cyclone, or wherein the air circulator is configured to lift the torrefied PG beans into the coffee collector cyclone.

In an advantageous embodiment, the air circulator comprises a roasting chamber inlet value configured to control a flow of the cooler air into the roasting chamber or into a coffee collector cyclone to cool down the torrefied PG beans.

In an advantageous embodiment, the roasting chamber comprises a plurality of air inlets through which the heated air enters the roasting chamber.

In an advantageous embodiment, the roasting chamber comprises a tubular cavity, the tubular cavity being configured to induce a disturbance in circulation of the heated air.

In an advantageous embodiment, the chaff collector cyclone comprises an air outlet configured to release the portion of the heated air and the released gases outside of the apparatus.

In an advantageous embodiment, the chaft collector cyclone further comprises a chaff output and a chaff container, wherein the chaff outlet configured to drop the chaff into the chaff container.

In an advantageous embodiment, the receiving section comprises a dosing portion comprising a weighing scale configured to measure weight of the PG beans in the dosing portion.

The apparatus of the preceding claim, wherein the receiving section further comprises a gate keeper configured to control transferred amount of the PG beans to the dosing portion according to a predefined condition.

In an advantageous embodiment, the apparatus further comprises a hopper configured to load the PG beans, wherein the hopper is connected to the receiving section.

In an advantageous embodiment, the apparatus includes a control system comprising:
- a controller unit configured to execute the preprogramed instruction to operate the apparatus;
- a switching circuit configured to control signals transmitted to the receiving section, the roasting section, the grinding section, and the degassing section based on signals from the controller unit; and
- a user interface configured to receive a user input to provide at least one parameter to the pre-programmed instruction or a coffee preparation profile.

Also disclosed herein is a method for coffee preparation, comprising:
- providing a coffee preparation apparatus according to any preceding embodiment,
- receiving coarse pre-ground (PG) green beans in the coffee preparation apparatus;
- torrefying the PG beans using heated air;
- grinding the roasted PG beans to fine ground coffee beans; and
- degassing the fine ground beans using a vacuum pump.

In an advantageous embodiment, the method includes separating by-product of torrefaction during the torrefying step, wherein the by-product comprises at least one of a portion of the heated air or released gases or chaff from the PG beans.

In an advantageous embodiment, the method includes actively cooling the roasted PG beans with ambient pumped air immediately after torrefaction.

In an advantageous embodiment, the coffee preparation apparatus is further configured to perform dosing the PG beans using a weighing scale.

In an advantageous embodiment, the coffee preparation apparatus is further configured to perform receiving a user input to provide at least one operation parameter for at least one of receiving, dosing, torrefying, separating, quenching, grinding, or degassing.

In an advantageous embodiment, the coffee preparation apparatus is further configured to perform serving the degassed beans to a container.

Also disclosed herein is a coffee machine, comprising:
a coffee preparation apparatus according to any preceding embodiment configured to receive coarse pre-ground (PG) green coffee beans and output degassed fine-ground roasted beans using the PG beans; and
a coffee brewing apparatus configured to brew a coffee using the degassed fine-ground roasted beans, wherein the coffee brewing apparatus comprises:
   a reception section to receive the degassed fine-ground roasted beans;
   a water section to supply water for brewing;
   a boiling section to heat the water for brewing; and
   a pressure section to generate pressure to the heated water through the degassed fine-ground roasted beans to brew the coffee from the said beans.

In an advantageous embodiment, the coffee brewing apparatus further comprises a container to receive the brewed coffee from the pressure section.

In an advantageous embodiment, the coffee machine further comprises a user device which is connected to the coffee machine communicatively, wherein the user device is configured to provide at least one coffee profile to the coffee machine, the coffee profile comprises a set of predefined parameters for operating the coffee preparation apparatus and the coffee brewing apparatus.

Further objects and advantageous features of the invention will be apparent from the claims, from the detailed description, and annexed drawings, in which:

### Brief description of figures

Figure 1 is a graph comparing roasting time to coffee bean core temperature of coarse pre-ground green beans and whole green beans;
Figure 2a is a schematic diagram of a coffee preparation apparatus according to an embodiment of the invention;
Figure 2b is a schematic diagram of the embodiment of the apparatus according to the invention within Figure 2a;
Figure 2c is a perspective view for the embodiment of Figure 2a;
Figure 2d is a perspective view for the embodiment of Figure 4a;
Figure 2e is a schematic diagram of a roasting section of an embodiment of the apparatus according to the invention during roasting;
Figure 2f is a schematic diagram of the roasting section within Figure 2e after roasting;
Figure 3a is a cutaway diagram of a roasting chamber of an embodiment of the apparatus according to the invention;
Figure 3b is a schematic diagram of the roasting chamber of an embodiment in Figure 3a;
Figure 4a is a schematic diagram of another embodiment of a coffee preparation apparatus according to the invention;
Figure 4b is a schematic diagram of a roasting cycle within the embodiment in Figure 4a;
Figure 4c is a schematic diagram of a coffee transfer cycle within the embodiment in Figure 4a;
Figure 4d is a schematic diagram of a cooling cycle within the embodiment in Figure 4a;
Figure 5a is a schematic diagram of a controller system of an embodiment of an apparatus according to the invention;
Figure 5b is an exemplary work flowchart of the coffee preparation apparatus when executed by the controller system in Figure 5a;
Figure 6 is another exemplary work flowchart of a coffee preparation apparatus when executed by the controller system;
Figure 7a is a diagram for a method for operating am embodiment of a coffee preparation apparatus according to the invention; and
Figure 7b is a series of schematic diagrams of the embodiment of the coffee preparation apparatus in Figure 7a illustrating workflow of the embodiment and corresponding section comprised in the embodiment, respectively; and
Figure 8 is a schematic diagram for a coffee machine according to the invention.

### Description

Referring to the figures, a coffee preparation apparatus 1 for roasting and degassing coarse pre-ground green coffee beans (PG beans) 50a for a single serve or multiple serves comprises a receiving section 3. The apparatus 1 can be a home appliance, a device, or a machine intended to be used in a domestic setting. Alternatively, the apparatus 1 can be used in commercial places such as restaurants or cafes. The receiving section 3 is configured to receive the PG beans 50a.

The apparatus 1 may further comprise a hopper 2 for the PG beans 50a. For instance, the hopper 2 is a container for keeping the PG beans 50a. The coarse pre-grinding of green coffee beans can be understood as grinding whole green coffee beans into smaller pieces or fraction of their intact size, yet bigger than standard particle sizes of roasted ground beans. For instance, the typical particle size of roasted coffee spans various ranges depending on the grind: 1,000 - 1,200 microns, 800 - 1,000 microns, 600 - 800 microns, 400 - 600 microns, 300 - 400 microns, 200 - 300 microns, or even smaller than 200 microns depending on brewing methods and personal preferences. On the other hand, particle sizes of the PG beans 50a can be typically around 1,000 - 2,000 microns or bigger depending on the grinding process.

For instance, the receiving section 3 is connected to the hopper 2 and the PG beans 50a are transferred or dropped (e.g. by gravity) to the receiving section 3. The receiving section 3 may comprise a dosing portion 9. The dosing portion 9 comprises a weighing scale 34 configured to calibrate or measure amount of the PG beans 50a, transferred to the receiving section 3, to be roasted. For instance, a dose of the PG beans 50a refers to a portion for a cup of coffee. The amount of the PG beans 50a (e.g. weight in g) for one dose may be predefined or may be provided by a user input. The dosing portion 9 can calibrate a plurality of doses of the PG beans 50a (e.g. a single, a double, or a multiple dose). Alternatively, a user may provide a numerical value for weight of the PG beans 50a (e.g. a dose of the PG beans) to be roasted and the weight of the PG beans 50a corresponding to the user input (e.g. the numerical value) may be calibrated at the dosing portion 9.

The receiving section 3 may further comprise a gate keeper 38 configure to control the reception of the PG beans 50a into the dosing portion 9. For instance, the gate keeper 38 blocks or closes an entry of the dosing portion 9 so that the PG beans 50a cannot enter into the dosing portion 9. The gate keeper 38 unblock the entry of the dosing portion 9 when roasting dose is set (e.g. predefined or user input) and reblock the entry once required weight of the PG beans 50a is achieved depending on the set dose. The dosing portion 9 outputs selected dose of PG beans (selected PG beans) 50b.

The apparatus 1 further comprises a roasting section 4. The roasting section 4 comprises a roasting chamber 10 in which the PG beans 50a or the selected PG 50b beans are loaded. For instance, the selected PG beans 50b enters into the roasting chamber 10 from the dosing portion 9. The roasting section 4 further comprises an air circulator 12 configured to drive heated air, configured to torrefy or roast the PG beans 50b or the selected PG beans 50b using the heated air within the roasting chamber 10.

The roasting section 4 is configured to roast the PG beans 50a or the selected PG beans 50b to a predefined roasting level and to cool down the roasted coffee beans to a predefined level. The roasting section 4 is connected to the receiving section 3 and the selected PG beans 50b are transferred to the roasting section 4. Standard coffee roasting levels are typically categorized by the degree of roast, which can be identified by visual, olfactory, or temperature indicators. For instance, standard coffee roasting levels are light roast, medium roast, medium-dark roast, and dark roast based on the color, smell, taste, or temperature. For instance, different roasting levels (e.g. light, medium, medium dark, or dark roast) are predetermined and roasting time and temperatures are predefined accordingly to achieve each roasting level. Depending on the origin or the blend of the PG beans 50a, the predefined roasting level may further vary. A default roasting level may be preprogrammed. Alternatively, a user input may be provided to select a desired roasting level in the predetermined different roasting levels. In an embodiment, a user input may provide a roasting time (e.g. seconds) and temperature depending on personal preference.

The roasting section 4 comprises an electric heater 14 which heats air pumped by the air circulator 12 as the air passes through the electric heater 14 and enters into the roasting chamber 10. The roasting chamber 10 may comprise a plurality of air inlets 10a. Then, through the air inlets 10a, the heat air through the electric heater 14 enters into the roasting chamber 10.

In an embodiment, when the apparatus 1 is executed or launched (e.g. power is supplied to the apparatus 1), before dosing the PG beans 50a or before the selected PG beans 50b enters to the roasting section 4, The electric heater 14 and the air circulator 12 may be executed to pre-heat the roasting changer 10 in order to ensure that the roasting chamber 10 reach a stable temperature (e.g. a predefined temperature) before the roasting process begins and improve uniformity and quality of roasting.

In an embodiment, the roasting section 4 may further comprise a temperature sensor 20, configured to measure a temperature of the roasting chamber 10. For instance, the temperature sensor 20 is directly coupled to a surface of the roasting chamber 10 in order to measure the temperature of the roasting chamber 10. The measured temperature by the temperature sensor 20 can be used to control roasting process of the selected PG beans 50b. For instance, the electric heater 14 may be turned off when the temperature reaches a predefined temperature point. Alternatively, the heat generated by the electric heater 14 can decrease or increase depending on the measured temperature to roast the selected PG beans to the predefined or user defined roasting level. Therefore, the temperature sensor 20 can improve roasting quality of the PG beans 50a.

In addition, the roasting section 4 further comprises a roasting chamber outlet valve 16, a roasted coffee bean collector cyclone (RC cyclone) 18, and a chaff collector cyclone 22. The roasting chamber outlet valve 16 is configured to control air flow and a transfer of the RC beans 50c from the roasting chamber 10. In general, roasting coffee beans generate a complex mix of gases and smoke due to intense heat and chemical reactions occurring within the beans, for instance, which include carbon dioxide, carbon monoxide, water vapor, and volatile organic compounds (VOCs). Further, chaff is separated from the beans. Chaff is a thin outer skin of a coffee bean that separates and flakes off during roasting. During roasting process, this layer is shed as the bean expands and its outer covering separates. It is composed mostly of cellulose and is a by-product of the roasting process. As it is lightweight and flaky, it can be removed and transfer with the air flow into the chaff collector cyclone 22.

Removal of gases and chaff during roasting can be needed for safety, quality, and efficiency. Gases like carbon monoxide and VOCs are flammable and needed be vented to prevent fire hazards, while chaff is highly combustible and can ignite if left in a roaster (e.g. the roasting chamber 10). Additionally, accumulated chaff can block airflow (e.g. the air inlets 10a), causing uneven roasting and introducing burnt flavors into the coffee. Therefore, proper gases and chaff handling can ensure consistent roasting, prevents equipment clogging, and maintains a safe, clean working environment.

During roasting, the selected PG beans 50b undergo physical transformations (e.g., changes in size, weight, color, and texture) and chemical transformations (e.g., flavor development, caramelization, and shifts in acidity levels), resulting in the RC beans 50c at the end of the process. Simultaneously, gases are released, and chaff 59 is separated from the selected PG beans 50b.

The roasting chamber outlet valve 16 comprises a connection point 23 through which an outlet 10a of the roasting chamber 10, an inlet 22a of a chaff collector cyclone 22, and an inlet 18a of the RC cyclone 18 can be connected so that air flow, a transfer of coffee beans, or are enabled between the roasting chamber 10, the chaff collector cyclone 22, and the RC cyclone 18. The roasting chamber outlet valve 16 further comprises a stopper 25 configured to block any one of the inlets 10a, 22a, or 18a depending on the execution procedure of the apparatus 1

The chaff collector cyclone 22 further comprises at least two outlets 22b and 22c. For instance, the first outlet 22b (or the second outlet 22c) is configured to release the released gases from the selected PG beans 50b during roasting. The second outlet 22c (or the first outlet 22a) is configured to output chaff 59 separated from the selected PG beans. During roasting, the stopper 25 blocks the inlet 18a of the RC cyclone 18 so that the released gases and the chaff 59 cannot enter into the RC cyclone 18 but be transferred to the chaff collector cyclone 22 through the roasting chamber outlet valve 16 (e.g. from the outlet 10a to the inlet 22a). The released gases are vented through the first outlet 22b (or the second outlet 22c) and the chaff 59 are released through the second outlet 22c (or the first outlet 22b). For instance, the chaff collector cyclone 22 may further comprise a chaff container 24. Then the chaff 59 released from the chaff collector cyclone 22 are transferred to the chaff container 24.

During roasting, the released gases and the chaff 59 are removed from the roasting chamber 10. After roasting, the stopper 25 is switched to block the inlet 22a of the chaff collector cyclone 22 while the inlet 18a of the RC cyclone 18 remains open. Then, the RC beans 50c are transferred to the RC cyclone 18. It facilitates the management of gases and chaff during the roasting process, ensuring both safety and optimal roasting quality.

After roasting, residual heat remains within the beans, which are still hot, allowing the roasting process to continue. Cooling quickly halts this process, locking in the desired flavor profile and preventing over-roasting or baking caused by the retained heat.

In an embodiment, the RC cyclone 18 may be used as a cooling chamber where the RC beans 50c are transferred for cooling. Then, during cooling, the electric heater 14 is turned off while the air circulator 12 is circulating air to provide the air into the RC cyclone 18 to cool the RC beans 50c. For instance, the RC cyclone 18 may further comprises a plurality of RC cyclone inlets 18b through which the airs from the air circulator 12 enters into the RC cyclone 18 and cools down the RC beans 50c.

In an embodiment, the RC beans 50c may be cooled down directly within the roasting chamber 10. Similar to the embodiment described above, the electric heater 14 is turned off and the air circulator 12 creates air flow which enters into the roasting chamber 10 to cool down the RC beans 50c through the air inlets 10a.

The apparatus 1 further comprises a grinding section 5. After roasting and cooling, the cooled RC beans 50c are transferred to or dropped into the grinding section 5 from a bean outlet 18b of the RC cyclone 18. The grinding section 5 is configured to grind the cooled RC beans 50c, which outputs fine-ground cooled roasted PG beans (FG beans) 50e.

The grinding section 5 comprises a grinder 26, and a grinding motor 28. The grinder 26 refers to a mechanical device that grinds coffee beans into smaller particles suitable for brewing. In this context, the coarse pre-ground cooled RC beans 50c are ground into smaller or finer particles. The motor 28 refers to an electric motor that provide a torque to operate (e.g. rotate) the grinder 26. For instance, the cooled RC beans 50c released from the bean outlet 18b of the RC cyclone 18 are directly fed or loaded into the grinder 26 and the grinder 26 outputs the FB beans 50e. In an embodiment, a speed of the motor 28 can be adjusted to achieve a predetermined grind size and consistency.

The apparatus 1 further comprises a degassing section 6. The degassing section 6 is configured to degas released gas from the FG beans 50e. After roasting and cooling, freshly roasted coffee beans can release gases (e.g. carbon dioxide and VOCs) too rapidly, which can interfere with the brewing process, especially in methods like espresso where gas can create uneven extraction. For fresh roasted whole beans or ground fresh roasted whole beans, this resting period can range from 30 minutes to several hours or even up to 7 days, depending on the roasting level of coffee and brewing method. Therefore, one may need to prepare the roasted beans in advance (e.g. at least 30 min or a week in advance) so that the roasted beans are ready to be brewed.

The degassing section 6 comprises a vacuum pump 30 and a degassing chamber 32. The FB beans 50e are directly dropped or transferred into the degassing chamber 32, in which the vacuum pump 30 removes released gases from the FG beans 50e.

As described above, the release of gases (e.g. carbon dioxide and VOCs) from roasted beans makes the resting period necessary to improve sensory quality and ensure proper extraction during brewing. Therefore, the degassing section 6 can accelerate the speed of the resting period by removing the released gases using the vacuum pump 30. It further reduces the preparation time for brewing coffee.

The accelerated degassing is explained by the fact that lowering the pressure at the roasted coffee grounds surface increases the mean free path of the unpleasant sensorial VOCs that need to be removed from the core of the roasted coffee grounds.

Pores sizes in roasted coffee grounds have a typical size between 20 to 50 nm, depending on the roasting level, meaning that coffee degassing occurs in molecular flow regime. A higher mean free path results in a reduced number of collisions and interactions of the unpleasant compounds molecules. This reduction of interactions and more unobstructed flow allows a greater number of molecules of unpleasant sensorial compounds to pass through the coffee pores faster.

For example, when reducing ambient pressure to 15 kPa, the mean free path in molecular flow is reduced from 50 µm to 68 nm. In molecular flow the flow rate is affected by the mean free path in a direct relationship.

Further, when roasting pre-grinded coffee, once the PG beans 50a are ground to the desired size (for espresso extraction) and put under vacuum the coffee degasses enough to be able to be extracted without the unpleasant aromas of fresh roasted coffee. This can be explained by the fact that, when roasting pre-grinded coffee, the path length for the gases to escape the coffee core is smaller and degassing is accelerated during roasting. Therefore, the degassing section 6 can even further accelerate the resting period required for the FG beans 50e compared to standard ground roasted beans.

The apparatus 1 may further comprises a container 9. After degassing process, the degassed FG beans 50f may be released or dropped into the container 8. The container can be any form of containers which can keep the degassed FG beans 50f or a portafilter with a basket for a coffee machine.

In an embodiment, depending on applications, the degassing chamber 32 can be further directly used as a container (e.g. the container 9). The degassed FB beans 50f can be directly accessible to a user from the degassing chamber 32.

The apparatus 1 further comprises a control system 7. The control system 7 is configured to execute the apparatus 1 based on a pre-programmed instruction, to control each section (e.g. the dosing section 3, the roasting section 4, the grinding section 5, or the degassing section 6) of the apparatus 1, and to receive a user input.

The pre-programmed instruction can be understood as a predefined sequence of actions that the control system 7 executes to provide the degassed FG beans 50f and a set of predefined parameters required for each action accordingly. For example, the predefined sequence of actions can be a series of dosing (e.g. the receiving section 3), roasting and cooling (e.g. the roasting section 4), grinding (e.g. the grinding section 5), and degassing (e.g. the degassing section 6). Accordingly, the set of predefined parameters may comprise the predefined single does weight of the PG beans 50a, the predefined roasting condition (e.g. roasting level, roasting temperature and time for each roasting level and the amount of the PG beans), a predefined grinding condition (e.g. grinding level and grind size and grinding time for each grinding level and quantity of input beans), a predefined degassing condition (e.g. e.g. degassing time). This is non-exhaustive list of actions and their associated parameters. It is worth noting that the actions and parameters may comprises related to the execution of the apparatus 1 to provide the degassed FG beans 50f.

Then, based on the pre-programmed instruction, the control system 7 controls each section by processing commands comprised in the pre-programmed instruction and coordinate the actions. For instance, the control system 7 receives feedback on conditions from sensors, e.g. temperature, weight scaling, or pressure.

In addition, the control system 7 receives a user input. For instance, the apparatus 1 may comprises a user interface, which can be a button or dial, or a touchscreen, or an application for a user device (e.g. a mobile device). Using the user interface, a user input is provided and transmitted to the control system 7. The user input can be a selection of predefined options (e.g. dose selection or roasting level selection) or be parameters (e.g. origin of the PG beans, time, or temperature) for each action.

For instance, the control system 7 comprises a power supply 11 configured to supply power to the apparatus 1. The control system 7 further comprises a user interface 21 configured to receive a user input and a controller unit 13 configured to execute the apparatus 1 based on the pre-programmed instruction and the user input. For instance, the user interface 31 may comprises a power switch to launch the apparatus 1. The user interface 31 may further comprise a plurality of buttons or dials to select parameters for the pre-programmed instruction (e.g. dose size, roasting level, brewing type, or grinding level). Additionally or alternatively, the user interface 31 may further comprise an interactive screen to select parameters for the pre-programmed instruction. The control system 7 further comprises a switching circuit 15 configured to send signal to each section to activate or deactivate according to the preprogramed instruction and the user input.

For instance, the user input indicates that selected dose of the PG beans 50a is 1 dose, brewing method is espresso, roasting level is medium roasting, grinding level is level A. Then, according to the pre-programmed instruction, the controller unit 13 may retrieve corresponding parameters for the given brewing method, dose size (e.g. a predefined weight for a single dose), roasting level (e.g. roasting temperature and duration), and grinding level (e.g. fineness level and duration).

Accordingly, the controller unit 13 send control signals to the switching circuit 15 to instruct it to perform actions by completing or breaking electrical circuits (e.g. turning each section on or off by their electrical path or regulating power to each section). For instance, the switching circuit 15 open and close the receiving section 3 to provide the selected dose PG green beans to roasting section 4. Then, the switching circuit 15 regulates power to the electrical heater 14 and the air circulator 12 to control the heating level. Similarly, following the predefined sequence of actions, the controller unit 13 sends control signals to the switching circuit 15 and the switching circuit 15 control each action based on the pre-programmed instruction and the user input.

The control system may further comprise a communication unit 19 (not shown) configured to receive a user input from a user device allowing a remote operation or execution of the apparatus 1. It may further facilitate providing a user input to the apparatus 1 for preparation of brewing coffee.

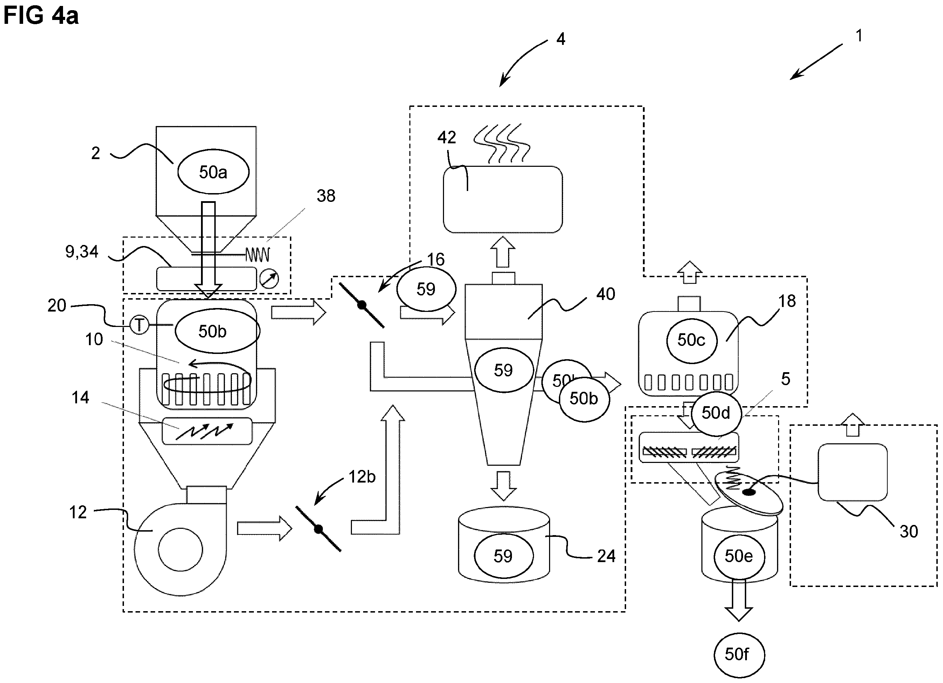

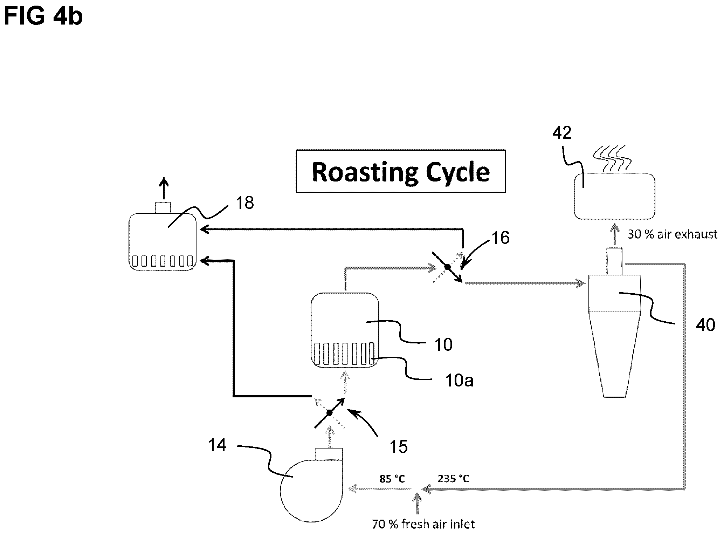

Further details regarding the control system 7 are provided in relation to Figures 4a and 4b.

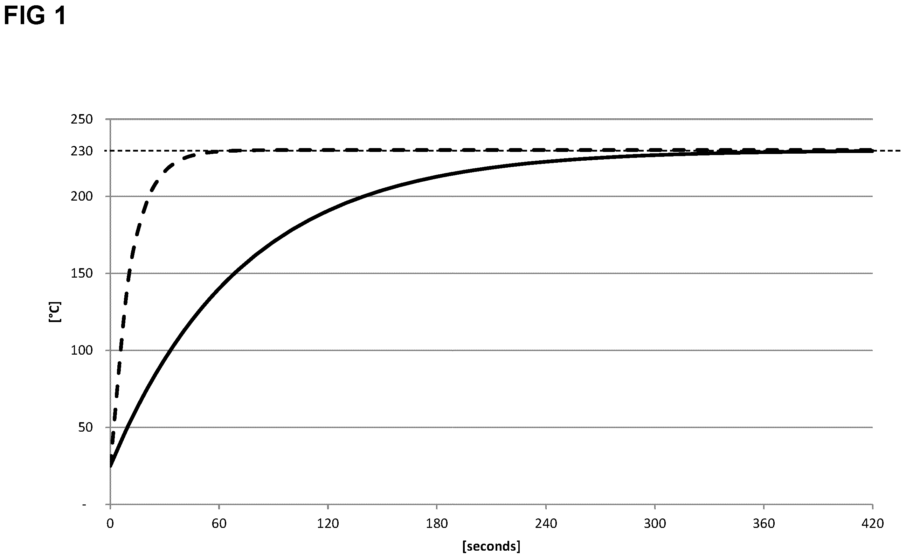

**Figure 1** illustrates a graph comparing roasting time to coffee bean core temperature for coarse pre-ground green beans (e.g. the PG beans 50a) and whole green beans.

The bold dashed line shows the core temperature of the coarse pre-ground green beans over time and the bold solid line shows the core temperature of the whole green beans. A light dashed line is a reference line indicating 230 °C, allowing the Maillard reaction.

The coffee roasting process can be divided into three phases. The first, the drying phase, removes moisture from the green beans, preparing them for chemical reactions. This stage typically lasts until the beans reach around 150°C. The second, the browning phase, involves increasing the bean temperature to approximately 230°C, allowing Maillard reactions and caramelization to occur. These reactions develop the beans' flavor and aroma precursors, giving them their characteristic brown color. The third, the development phase, maintains high temperatures to finalize flavor and color. The first crack occurs here, marking gas release and bean expansion. Shorter development preserves acidity, while longer roasting enhances caramelized flavors.

As shown in Figure 1, in order to reach 230°C for the core of the whole green been takes around 360 seconds, on the other hand, for the coarse pre-ground green beans, it takes around 60 seconds for its core to reach 230°C.

The faster roasting of pre-ground green coffee beans can be explained by their Biot number (Bi), a dimensionless parameter that characterizes the relationship between heat conduction within a solid object and heat transfer at its surface. The Biot number is widely used in heat transfer analysis to determine whether an object's internal temperature (e.g. coffee beans) can be considered uniform or if internal temperature gradients must be accounted for. It is calculated using the heat transfer coefficient, a characteristic length (e.g., the ratio of the object's volume to its surface area), and the material's thermal conductivity.

For a whole green coffee bean, a Biot number is approximately 0.67. In contrast, coarse pre-ground green coffee beans have a Biot number of less than 0.1. In such cases (e.g. Bi << 1 or Bi ≤ 0.1), the lumped capacitance assumption becomes valid. This means that the internal conduction resistance is negligible compared to the heat convection resistance at the surface, allowing the internal temperature of the object to be considered uniform. For coarse pre-ground coffee beans, the significantly larger surface area exposed to heat further facilitates rapid roasting, even with lower-temperature heat sources. Therefore, a roaster may consume less power or energy when roasting the coarse pre-ground beans than the whole green beans.

Since the distance from the surface to the core of a pre-ground particle is much smaller than that of a whole bean, it takes considerably less time for the particle to reach the desired temperature. Additionally, the Maillard reaction, which is critical for developing the roasted coffee's flavor profile, occurs faster in pre-ground beans. As described, coarse pre-ground green coffee beans exhibit a more homogeneous temperature distribution within each particle due to the lumped capacitance assumption. Consequently, roasting time and energy consumption are reduced when roasting pre-ground green beans (e.g. the PG beans 50a), and the roasting process produces a more uniform quality compared to roasting whole green beans.

In general, the recommended consumption times for roasted coffee are as follows: roasted whole beans are best consumed within 2-4 weeks of roasting, although this may vary depending on storage conditions. For ground roasted beans, the recommended consumption time is even shorter, within 1-2 weeks of grinding, as ground coffee stales much faster due to increased exposure to air, light, and moisture. Roasted beans degrade quickly due to their porous nature and exposed oils, which oxidize and go stale within weeks. On the other hand, green coffee beans can be preserved for months or even years because their higher moisture content, stable chemical structure, and sealed oils make them less susceptible to oxidation and environmental factors. However, as described above, the steps involved in preparing coffee-such as dosing, roasting, managing released gases and chaff, cooling, grinding, and degassing-can be time-consuming.

Therefore, the apparatus 1 can provide a ready to be brewed (roasted and ground) coffee beans in time and efficient manners by using the PG beans 50a and by streamlining processing steps involved in preparing the degassed FB beans 50f. It can further provide more even roasting quality compared to roasting whole green beans as described above (e.g. Figure 1). For instance, from roasting to degassing, the entire procedure can be reduced to 90 seconds instead of spending multiple days (e.g. around 20 minutes for roasting and 7 days for degassing).

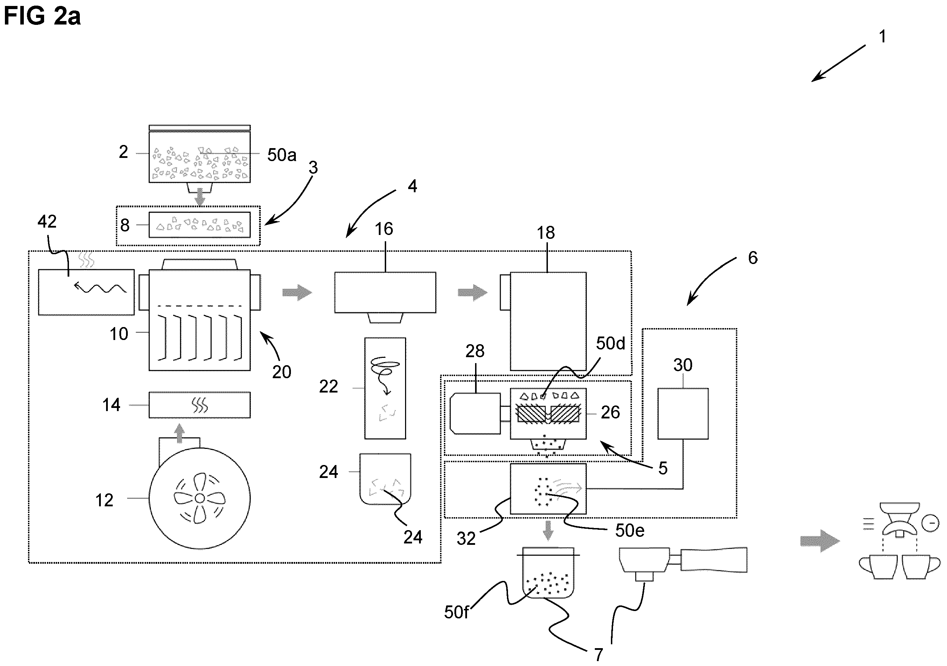

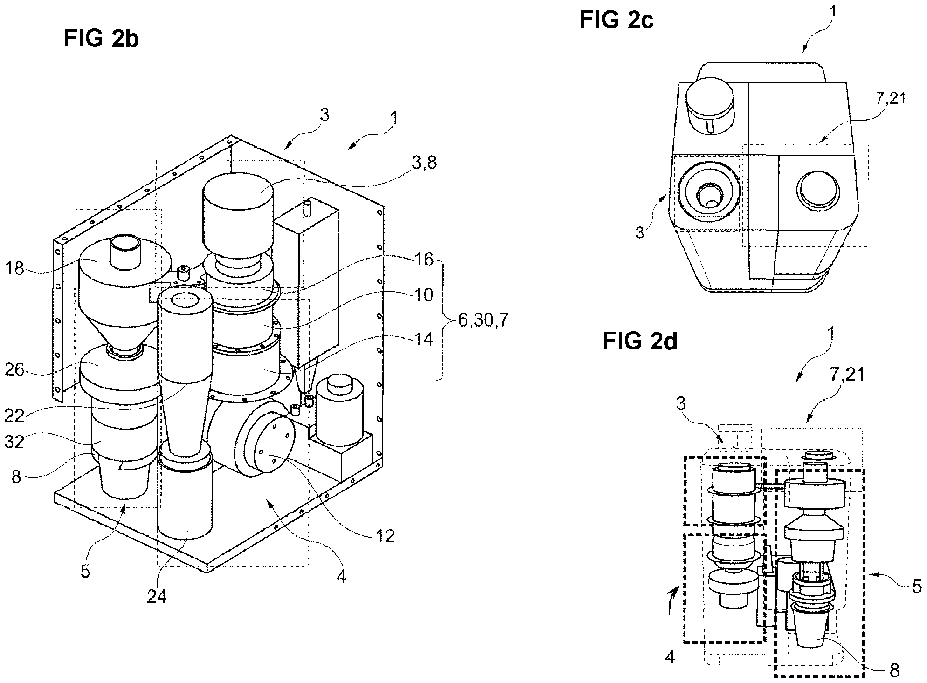

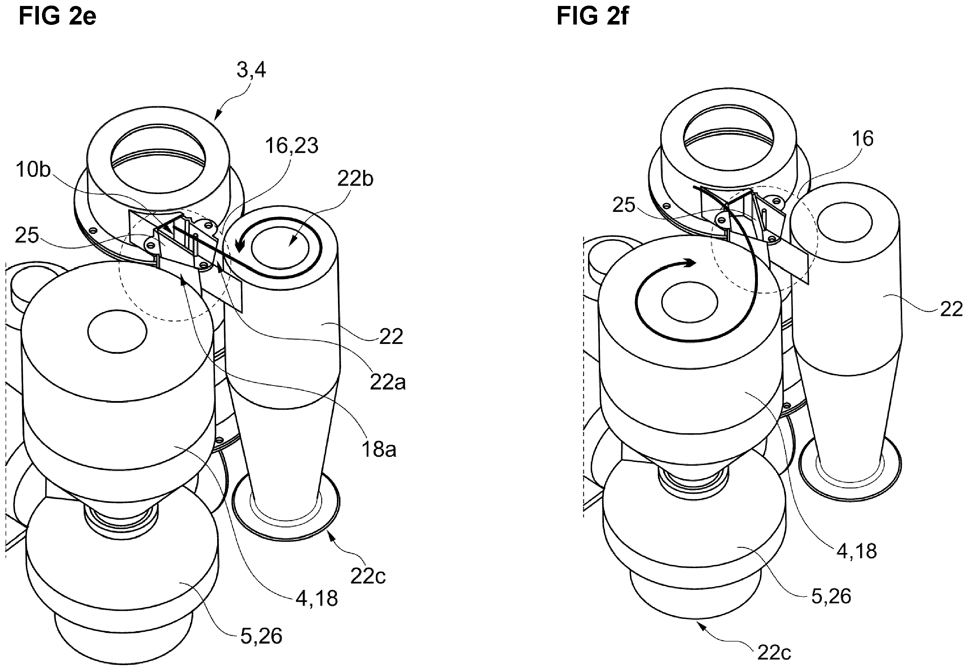

Following figures (e.g., Figures 2 - 3d) illustrate various embodiments of the apparatus 1 according to the application.

**Figure 2** illustrates an embodiment of the apparatus 1 according to the application. As described for the apparatus 1 above, the embodiment of the apparatus 1 comprises the hopper 2, the dosing section 3, the roasting section 4, the grinding section 5, degassing section 6, and the control system 7.

As described above, the PG beans 50a are loaded to the hopper 2. When a roasting dose is provided, the receiving section 3 opens (e.g. the gate keeper 38) until the weight of the PG beans reaches the required weight based on the selected dose using the weighing scale 34. Then the selected PG beans 50b enters the roasting section 4 (e.g. the roasting chamber 10).

For instance, the roasting chamber 10 may be pre-heated using the electric heater 14 and the air circulator 12. In the roasting section 4, the selected PG beans 50b are roasted using the heat air blow from the air circulator 12 flowing through the electric heater 14 into the roasting chamber 10.

During roasting, the roasting chamber outlet valve 16 closes a connection between the RC cyclone 18 and the roasting chamber 10 and opens a connection between the roasting chamber 10 and the chaff collector cyclone 22 so that the hot air flows from the roasting chamber 10 is directed to the chaff collector cyclone 22 and further the chaff are separated through this connection.

On the other hand, after roasting, the roasting chamber outlet valve 16 closes the connection between the roasting chamber 10 and chaff collector cyclone 22 but opens the connection between the roasting chamber 10 and the RC cyclone 18.

For instance, after roasting, the RC beans 50c may be directly cooled within the roasting chamber 10 as described above. Then, the cooled RC beans 50c are transferred to the RC cyclone 18 and transferred to the grinding section 5.

For instance, the grinder 26 may be burr grinders, which comprises two abrasive surfaces (e.g. burr), one stationary and the other rotating. Beans are fed between the burrs and are crushed or ground to a uniform size according the predefined ground level. Alternatively, the grinder 26 may be a blade grinder comprising at least one (propeller-like) blade to chop coffee beans by rotating the blade grinder. The cooled RC beans 50c are fed or loaded to the grinder 26 directly while the motor 28 is operating (e.g. rotating the grinder 26).

For instance, the grinder section 26 may further comprise a sensor to monitor the speed of the motor, which provide feedback to the control system 7 for a precise grinding quality control.

Then, the FG beans 50e are transferred to the degassing section 6. In this embodiment, the FG beans 50e passing through the grinder 26 are directly dropped into the degassing chamber 32. The vacuum pump 30 lowers a pressure inside the vacuum chamber 32 by removing airs including the gases released from the FG beans 50e. The air molecules move from the high pressure area (e.g. the vacuum chamber) to low pressure area (e.g. to the vacuum pump 30). After degassing, the degassed FG beans 50f are transferred to the container 8, which are ready to be brewed.

**Figure 2b** illustrates another schematic diagram of the embodiment (e.g. Figure 2a) of the apparatus 1 according to the application.

As described above in relation to Figure 2a, the receiving section 3, the roasting section 4, and the grinding section 5 are connected by the roasting chamber outlet valve 16, which allows to control air flow within the embodiment. Detailed description related to the roasting chamber outlet valve 16 is provided in Figures 2e and 2f.

**Figure 2c** illustrates a perspective view of the embodiment of the apparatus 1 within Figure 2a. Figure 2c shows an example of the user interface 21. In this embodiment, a user may provide a user input using a dial to select predefined options according to the pre-programmed instruction. For instance, the user interface 31 may further comprise a display which shows the predefined options and user selections. The receiving section 3 illustrated in Figure 2c shows a receiving opening where the hopper 2 can be connected to the opening of the receiving section 3. As described above, for instance, when the apparatus 1 is turned on and the pre-programmed instruction is launched together with the user input, the opening receives the selected dose of the PG beans enters into the dosing portion 9 and the opening is closed after weight for the required dose reaches.

**Figure 2d** illustrates yet another schematic diagram of the embodiment of the apparatus 1 within Figure 2a in a different angle.

**Figure 2e and 2f** illustrate schematic diagrams of the roasting chamber outlet valve 16 within the embodiment in Figure 2a during roasting (Figure 2e) and after roasting (figure 2f).

As described above for the embodiment in Figure 2a, the roasting chamber outlet valve 16 is connected to the roasting chamber 10 and the receiving section 3 vertically. In other words, within this embodiment, the roasting chamber outlet valve 16 is positioned between the receiving section 3 and the roasting chamber 10 and connect them. In addition, the roasting chamber outlet valve 16 are connected to the RC cyclone 18 and the chaff collector cyclone 22 (e.g. the connection point 17).

In Figure 2e, during roasting (e.g. switch off), the stopper 25 blocks the inlet 25a of the RC collector cyclone, so that smoke generating during the roasting and the chaff 59 cannot enter the grinding section 5 but transfer them to the chaff collector cyclone 22. An arrow shown in Figure 2e indicates the transfer direction of the released gases and the chaff 59 during roasting.

On the other hand, in Figure 2f, after roasting (e.g. switch on), the stopper 25 bocks the inlet 22a of the chaff collector cyclone, so that the RC beans are transferred to the grinding section 5 through the RC cyclone 18. An arrow shown in Figure 2f indicates the transfer of the RC beans 50c from the roasting chamber 10 to the RC cyclone 18.

Notably, the outlet 10b of the toasting chamber 10 remains open. During roasting, the outlet 10b of the roasting chamber 10 allows the released gases and the chaff 59 are vented out from the roasting chamber 10 to the chaff collector cyclone 22. After roasting, the outlet 10b of the roasting chamber 10 allows the RC beans 50c are transferred to the RC cyclone 18.

Therefore, the roasting chamber outlet valve 16 can ensure separation of the released gases during roasting process, the chaff, and the RC beans 50c.

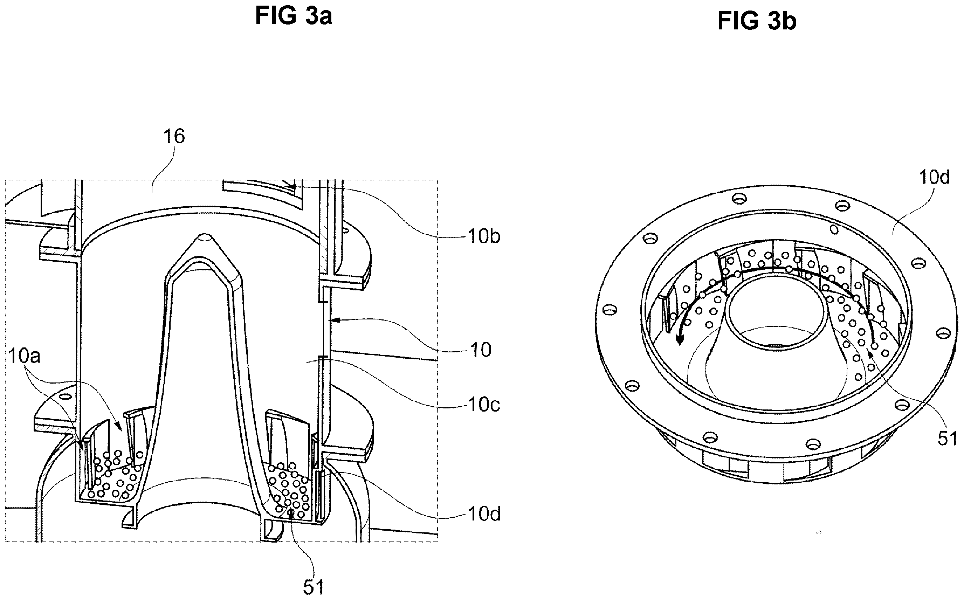

**Figures 3a and 3b** illustrates the roasting chamber 1 of an embodiment of the apparatus 1 according to the application.

**Figure 3a** illustrates a cutaway diagram of the roasting chamber 10. For instance, the selected PG beans 50b moves circularly dragged by the perpendicular flow entering the roasting chamber. The roasting chamber 10 comprise a plurality of the air inlets 10a configured to allow the air blew from the air circulator 12 to enter into the roasting chamber 10. For instance, the air inlets 10a are positioned close to a bottom (e.g. closed end) of the roasting chamber 10 and radially along a surface or a wall of the roasting chamber 10. The air inlets 10a may be evenly spaced. Alternatively, distance between each inlet 10a may vary depending on applications.

For instance, the roasting chamber 10 may further comprises an upper part 10c and bottom part 10d which are connected to form the roasting chamber 10. The roasting chamber 10 may further comprise an inner hollow core (e.g. conical frustum or taper cylinder) 27 with one closed end toward inner volume of the roasting chamber 10. The roasting chamber 10 and the inner hollow core share the same central axis.

For instance, the presence of the inner hollow core 27 within the roasting chamber 10 can provide air flow control within the roasting chamber 10. As the inner hollow core changes aero dynamics within the roasting chamber 10 alters radial and axial pressure distributions. For instance, disrupts the flow, introducing turbulence and secondary flow patterns that promote faster inter air circulation, which can improve even roasting quality.

**Figure 3b** illustrates a cutaway diagram of the bottom part 10d of the roasting chamber 10. In addition, Figure 3b illustrates the selected PG beans 50b and air circulation as a bold arrow within the bottom part 10d. For instance, the bottom part 10c may comprises the air inlets 10a. For instance, the air inlets 10a are positioned along a wall or a surface of the bottom part 10d.

**Figure 4a** illustrates a schematic diagram of another embodiment of the apparatus 1 according to the application. As described above, the embodiment in Figure 4a comprises the hopper 2, the receiving section 3, the roasting section 4, the grinder section 5, and the degassing section 6. For illustrative purposes, the control system 7 is not presented in Figure 4a. In addition, Figure 4a shows a flow chart of the preparation of the degassed FB beans 50f from the PG beans 50a.

As described above, during receiving and dosing, the gate keeper 38 in the receiving section 3 opens and closes the opening of the dosing portion 9 to allow the PG beans 50a to enter the dosing portion 9. After receiving a user input, according to the pre-programmed instruction, the control system 7 execute each section of the apparatus 1. The selected PG beans 50b enters into the roasting chamber 10. For instance, the gate keeper 38 may be a spring load gate configured to open and close automatically using a spring's tension. The spring mechanism provides automatic closure or consistent pressure, ensuring that the FB beans 50e cannot enter into dosing portion after dosing or before the apparatus 1 is turned on.

During roasting, the roasting chamber 10 may be pre-heated. The electric heater 14 is turned on and the air circulator 12 is turned on. The electric heater 14 generate heat and the air blew from the air circulator 12 passes through the electric heater 14 and the heated air enters into the roasting chamber 10 through the air inlets 10a. As described above, during roasting, the stopper 25 of the roasting chamber outlet valve 16 turns, flips, or switches to open the connection between the roasting chamber 10 and the chaff cyclone 22, which allows to remove the chaff 59 and the released gases from the roasting chamber 10 to the chaff collector cyclone 22.

The air circulator 12 may comprise a roasting chamber inlet valve 12b configured to direct a direction of an air vented out from the air circulator 12. For instance, during roasting, the roasting chamber inlet valve 12b opens towards to the electrical heater 14 so that the air from the air circulator 12 can be heated and roast the selected PG beans 50b within the roasting chamber 10. Further, after roasting, to cool down the RC beans 50c, the air circulator switch 14b opens towards the RC cyclone 18 (e.g. cooling chamber) so that the RC beans 50c can be cooled down (e.g. the cooled RC beans 50c). After cooling, the cooled RC beans 50c enter into the griding section 5. During griding, the motor 28 rotates the grinder 26 and the cooled RC beans 50c are directly loaded or fed to the grinder 26, which output the FG beans 50e.

Within this embodiment, the vacuum chamber 32 comprises a lid 32a which is connected to the vacuum pump 30. During degassing, after the FG beans 50e enter to vacuum chamber 32, the lid 32a is closed and the vacuum pump 30 removes the gases released from the FG beans 50e. After degassing, the lid 32a opens and the degassed FG beans 50f are prepared.

Figures 4b - 4d illustrate roasting, the transfer of the RC beans 50c, and cooling cycles within the embodiment in Figure 4a in relation to the roasting chamber outlet valve 16 and the air circulator 12.

**Figure 4b** illustrates a schematic diagram of roasting cycle in connection with the embodiment described in Figure 4a.

As described above during roasting, the roasting chamber outlet valve 16 opens the connection between the roasting chamber 10 and the chaff cyclone 22. The roasting chamber inlet valve 12b open the connection between the air circulator 12 and the electric heater 14. Therefore, the heated air is provided to the roasting chamber 10 and the smokes created during roasting and the chaff 59 are transferred to the cyclone 22. For instance, a predetermined portion of air is released through the opening of the cyclone which is connected to a smoke handling element 42 of the roasting section 4. As an example, 30% of released gas from the roasting chamber 10 is vented out through the smoke handling element 42. The rest 70% of the released gas is circulating back to the air circulator 12 via the internal gas channel 46. For instance, the gas channel 46 comprises a filter 48 which filter the VOCs and carbon dioxide. Then, via the internal gas channel 46, fresh air is provided, which can cool down temperature of the returned gases within the internal gas channel 46.

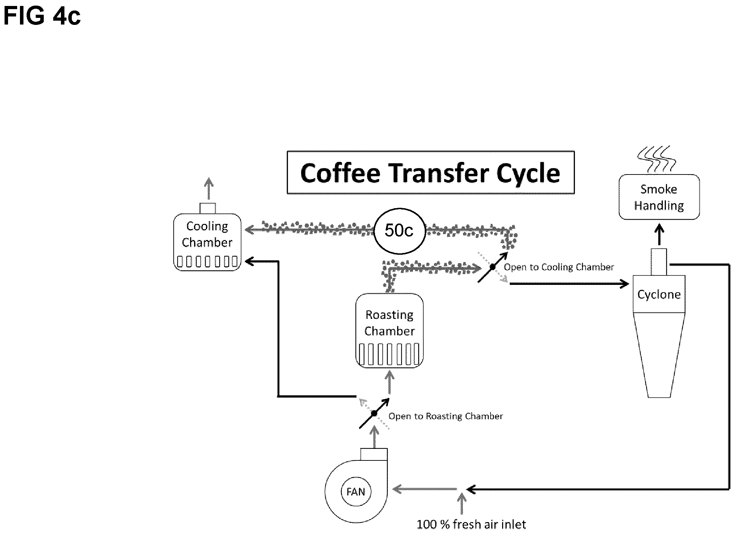

**Figure 4c** illustrates the transfer of the RC beans 50c within the roasting section 4 after roasting. After roasting, the stopper 25 is switched to close or block the inlet 18a of the RC cyclone 18 while the inlet 22a of the chaff collector cyclone 22 remains open. While the roasting chamber inlet valve 12b is still open to the roasting chamber 10. Through the smoke handling out 42, fresh air outside the apparatus 1 enters into the internal gas channel 46. Further, the electric heater 14 is turned on off. However, the air from the air circulator 12 pass through the electric heater 14.

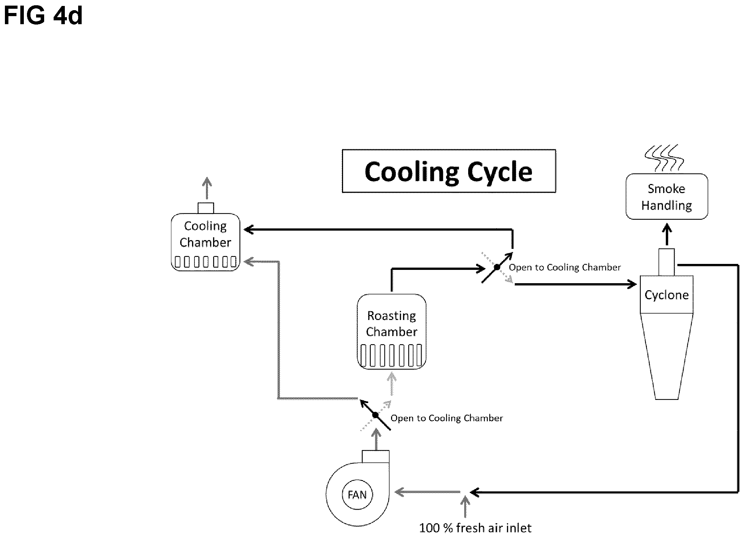

**Figure 4d** illustrates a cooling cycle. In this cooling cycle, the stopper 25 is switched to block or close the inlet 22a of the chaff collector cyclone 22, resulting in the inlet 18a of the RC cyclone 18 being open which allows the RC beans 50c to the RC cyclone 18. Accordingly, the roasting chamber inlet valve 12b switches to change the direction of the air circulation from the air circulator 12 to RC cyclone 18 instead of the electric heater 14 to cool down the RC beans 50c. After a predefined time period, cooling finishes.

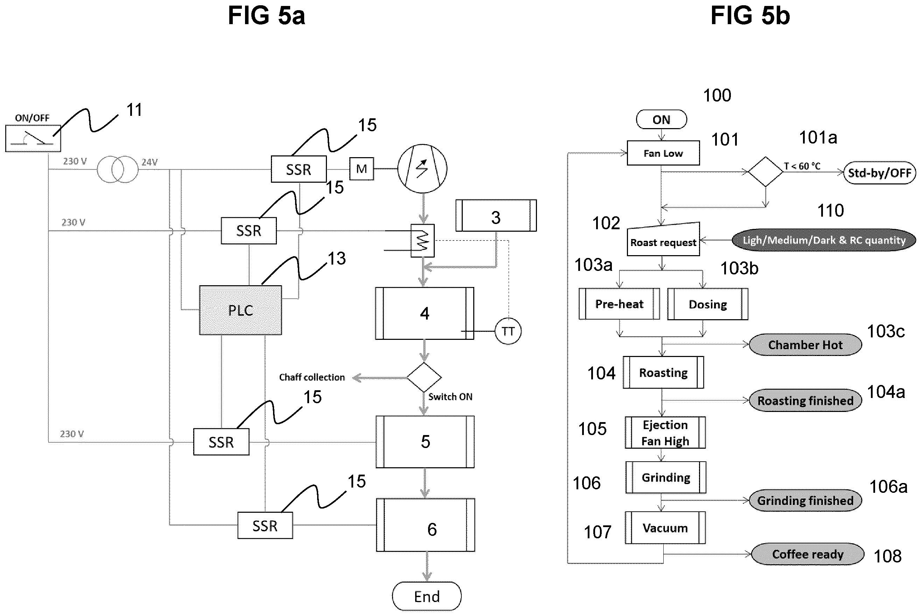

**Figure 5a** illustrate a simplified circuit diagram of the control system 7 of an embodiment of the apparatus 1 according to the application.

Once power is supplied to the apparatus 1, the power is supplied to the control system 7. For instance, the controller unit 13 may be a programmable logic controller (PLC) or a microcontroller unit (MCU). In Figure 5a, the controller unit 13 may be a PLC. The switching circuit 15 may be a solid-state relay (SSR), which is an electronic switching circuit that uses semiconductors to control a flow of electricity. SSRs can switch on and off faster than mechanical relays and can provide electrical isolation between a control circuit (input) and a load circuit (output). In this context, the control circuit and the load circuit can be understood as the controller unit 13 and each section comprised in the apparatus 1, respectively.

For instance, the controller unit 13 may operate the apparatus 1 according to the pre-programmed instruction. The predefined operation sequence may be an execution of the receiving section 3, the roasting section 4, the grinding section 5, and the degassing section 6 in order. Then, the controller unit transmit signals accordingly to each section and the switching circuit 15 allow or block the transmitted signal for corresponding section. The transmitted signals may comprise predefined parameters for operating corresponding sections accordingly.

**Figure 5b** illustrates an exemplary flowchart of the pre-programmed instruction executed by the control system 7.

For example, the apparatus 1 is turned on or power is supplied to the apparatus 1 at 101. Then, the air circulator 12 may be turned on at 101 (e.g. turning on the apparatus 1) and start to circulate at a predefined speed. Further, a temperature of the roasting chamber may be checked using the temperature sensor 20 and the measured temperature is transmitted to the controller unit 13. A user may provide or load the PG beans 50a into the hopper 2 before or after turning on the apparatus 1.

The apparatus 1 may receive a user input 110 at 102 (e.g. receiving a user input). The user input may comprise a selected dose (e.g. roasting quantity) and a roasting level. The control system 7 receives the user input 110 at 102 and send a signal at 103a (e.g. pre-heating) to the roasting section 4 to pre-heat the roasting chamber and another signal at 103b (e.g. dosing) to the receiving section 3 to measure the selected dose of the PG beans (e.g. the selected PG beans 50b). The temperature sensor 20 sends a signal to the control system 7 once the roasting chamber 10 reaches the predefined roasting temperature for roasting at the roasting section 4. Then, the control system sends a signal to the receiving section 3 so that the receiving section ejects the selected PG beans 50b to the roasting chamber 10. At 104 (e.g. roasting or torrefying), the roasting section 4 start to roast the selected PG beans 50b using the air circulator 12. Once a predefined condition for roasting according to the user input is satisfied, the control system 7 receives a signal from the roasting section 4 at 104 to turn of the electric heater 14. It is not presented in Figure 5, while roasting at 104, the by-product of the roasting section 4 is released to the chaff collector cyclone 22. The control system 7 sends a signal to the roasting chamber outlet valve 16 so that the by-product is driven towards the chaff collector cyclone 22 instead of the coffee collector cyclone 18.

Further, the control system 7 sends a signal at 105 (e.g. ejecting) to the roasting section 3 to transfer the RC beans 50c within the roasting chamber 10 into the coffee collector cyclone 18. For instance, the control system 7 increase a circulation rate of the air circulator 12 to transfer the RC beans 50c to a predefined rate as the RC beans 50c are heavier than the by-product (e.g. roasting gases and the chaff 59) higher air circulation rate may be required. It is not shown in Figure 5b, the control system 7 may send a signal to the air circulator 12 to quench the RC beans 50c. Then, the cooler air driven from the air circulator 12 enters into the coffee collector cyclone 18 and quench the RC beans 50c.

In addition, the control system 7 sends a signal to the grinding section 5 to grind the cooled RC beans 50c according to the user input 110 at 106 (e.g. grinding). Once a predefined condition is satisfied, the control system 7 sends a signal at 106a to block the operation of the grinding section 5 at 106a. As described above, the FG beans 50e may be directly dropped or enter into the degassing section 6.

The control system 7 sends a signal to the degassing section 6 at 107 to remove the released gases from the FG beans using the vacuum pump 30. For instance, the signal may comprises a predefined pressure and a predefined duration for operating the vacuum pump 30. Further, the control system 7 controls a sealing of the degassing chamber 32 while the vacuum pump 30 is being operated and release the degassing chamber 32 once the operation is done. Then the control system 7 may send a signal to the user interface 21 at 108 to inform that the pre-programmed instruction is finished.

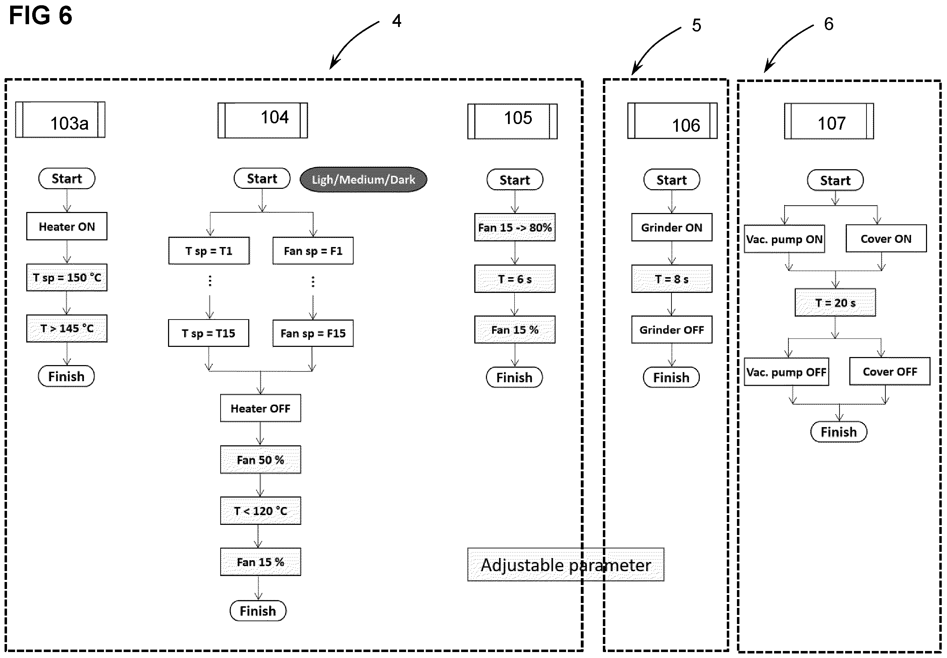

**Figure 6** illustrates another exemplary flowchart of the pre-programmed instruction with an example of the set of the predefined operation parameters for corresponding sections. It is worth noting that, for illustrative purposes, the example shown in Figure 6 illustrates a partial set of operation parameters used at the roasting section 4, grinding section 5, and the degassing section 6.

For instance, to execute the pre-programmed instruction, the control system 7 sends a signal to each section to start and operate corresponding section accordingly and another signal to finish the operation of each section. This can be done using the switching circuit 15 by allowing or blocking signal transmission between the controller unit 13 and the sections comprised in the apparatus 1.

For instance, for pre-heating at 103a, the control system 7 may send a signal to the receiving section to initiate pre-heating at 103a and the electrical heater 14 turns on accordingly. The predefined parameters for pre-heating may comprise a pre-heat temperature (e.g. 150 °C) and a condition to finish pre-heating (e.g. pre-heating stops when a temperature of the roasting chamber 10 is higher than 145 °C). When, pre-heating at 103a satisfies the predefined parameters then the control system 7 sends a signal to the roasting section 4 to stop pre-heating.

Similarly, for roasting at 104, according to the user input 110 (e.g. roasting level), roasting time (e.g. time for operating the air circulator 12 to provide the heated air into the roasting chamber 10) and a speed of the air circulator 12 may be provided as the predefined parameters. After the predefined roasting time, the electrical heater 14 is turned off by the control system 7 and the speed of the air circulator reduces by 50%. Once the temperature of the roasting chamber 10, measured by the sensor 20 and transmitted to the control system 7, is lower than a predefined temperature (e.g. 120 °C), the speed of the air circulator further is further reduced to 15%.

For ejecting at 105, for instance, the circulation rate of the air circulator 12 may increase from 15% to 80% and operation duration of the air circulator 12 may be 6 second. Then after 6 seconds, the circulation rate may decrease to 15%.

Then, for grinding at 106, the control system 7 may turn on the motor 28 of the grinding section 5 which rotates the grinder 26 for a predefined duration (e.g. 8 seconds). After the predefined duration, the motor is turned off.

Further, for degassing at 107, the control system 7 may simultaneously turn on the vacuum pump 30 and seal the degassing chamber 32. For instance, the degassing chamber 32 may comprise the lid 32 connected the vacuum pump 30. For instance, by closing the degassing chamber with the lid 32a and removing the released gases from the FG beans 50e to the vacuum pump 30 via the connection (e.g. a funnel or a pipe) so that the released gases may be only transferred to the vacuum pump during degassing at 107 for a predefined degassing time (e.g. 20 seconds).

After the predefined degassing time, the vacuum pump may be turned off and the degassing chamber 32 may open by releasing the lid 32a.

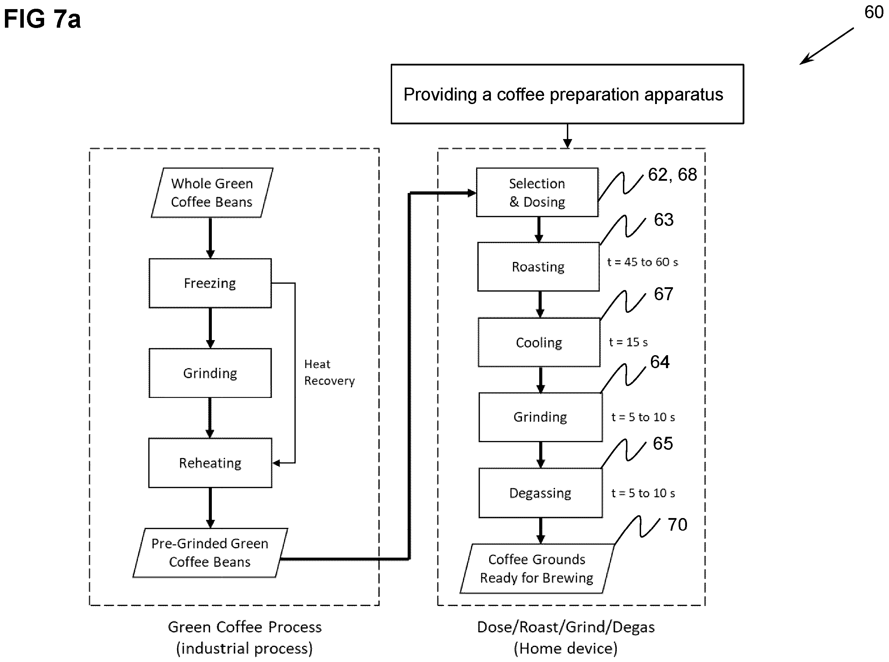

**Figure 7a** illustrates a flowchart of a method 60 for coffee preparation. The method 60 comprises providing 61 a coffee preparation apparatus. For instance, the coffee preparation apparatus in Figure 7a can be understood in connection with what is described for the apparatus 1. Further, the coffee preparation procedure performed by the coffee preparation apparatus in the method 60 can be understood in connection with each section comprised in the apparatus 1.

The coffee preparation apparatus is configured to perform receiving 62 coarse pre-ground (PG) green beans (e.g. the PG beans 50a). Further, the coffee preparation apparatus is configured to perform torrefying 63 the PG beans using heated air and grinding 64 the roasted PG beans. In addition, the coffee preparation apparatus is configured to perform degassing 65 the ground beans using a vacuum pump.

Therefore, analogous for what is described for the apparatus 1 above, the method 60 can provide a time efficient and reproducible way to prepare a coffee for brewing using the coarse PG beans and degassing 65.

In an embodiment, the coffee preparation apparatus is further configured to perform separating 66 during torrefying 63. The by-product comprises at least one of a portion of the heated air or released gases or chaff from the PG beans.

In an embodiment, the coffee preparation apparatus is further configured to perform quenching or cooling 67 the roasted PG beans with cooler air.

In an embodiment, the coffee preparation apparatus is further configured to perform dosing 68 the PG beans using a weighing scale based on a predefined parameter.

In an embodiment, the coffee preparation apparatus is further configured to perform receiving 69 a user input to provide at least one operation parameter for at least one of receiving 62, dosing 68, torrefying 63, separating 66, quenching 67, grinding 64, or degassing 65.

In an embodiment, the coffee preparation apparatus is further configured to perform serving the degassed coffee beans (e.g. the degassed PG beans 50f) after degassing 65 to a container, in which the degassed coffee beans are ready to be brewed as released gases from the beans are removed due to degassing 65.

The flowchart of the method 60 further shows a general process for producing the coarse PG green beans in an industrial setting for illustrative purposes. Firstly, the process comprises providing whole green coffee beans. Then, the process further comprises freezing or cooling the whole green coffee beans to a low temperature. For instance, the temperature is typically below -18°C to preserve oils within the coarse PG green beans and below -50 °C to achieve brittleness to facilitate following grinding. In addition, the process comprises grinding the frozen whole green beans to be broken into smaller pieces, for instance, around 70 times smaller than a size of the whole green bean. The process further comprises reheating of the ground frozen green coffee, which reduces the humidity of the final output, the coarse PG beans, to a minimum level, typically below 8% of humidity level.

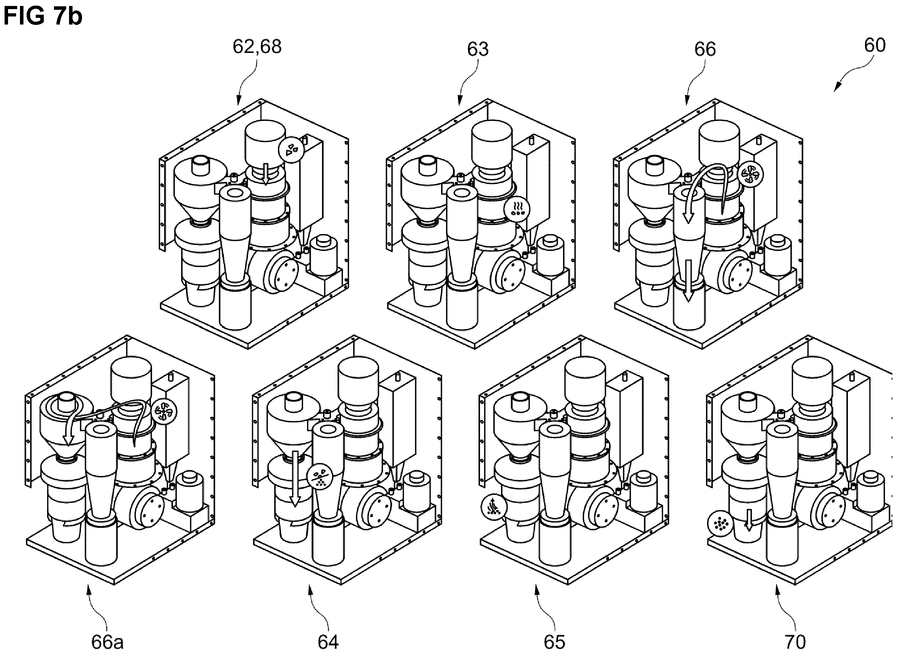

**Figure 7b** illustrates a series of schematic views of operation of the coffee preparation apparatus according to the method 60. As described above, the coffee preparation apparatus is analogous to what is described for the apparatus 1 above.

For instance, receiving 62 can be understood in connection with the receiving section 3. The coarse PG beans (e.g. the PG beans 50a) are received using the receiving section 3. Further, dosing 68 may be performed to measure a predefined dose or a selected dose by a user input of the coarse PG beans. Accordingly, the coarse PG beans or the selected dose of the PG beans (e.g. the selected PG beans 50b) are roasted (e.g. torrefying 63) at the roasting section 4.

During torrefying 63, at the roasting section 4, by-product of torrefying 63 may be separated (separating 66), for instance, using the air circulator 12, the roasting chamber outlet valve 16, and the chaff collector cyclone 22 as described above (e.g. Figures 2a - 2f, Figure 4a - 4b).

At grinding section 5, the roasted beans (e.g. the RC beans 50c) are ground into smaller pieces according to a predefined grinding level. It is worth noting that, a particle size of the coarse ground green beans ranges from 1,000 to 2,700 microns and a particle size of the ground roasted beans ranges from 100 to 1,600 microns. Depending on brewing method (e.g. cold brew, drip coffee, espresso, or Turkish coffee), grinding level may vary.

For instance, before grinding 64, the roasted beans may be quenched (e.g. quenching 67) at the roasting section 4 using the air circulator 12, which may prevent over-roasting due to residual heat of the roasted beans.

Further, at the degassing section 5, the fine-ground roasted beans (e.g. the FG beans 50c) are degassed using the vacuum pump (e.g. the vacuum pump 30). As described for the apparatus 1 above, a resting period is recommended for roasted coffee beans, as they release gases, including volatile organic compounds (VOCs) and carbon dioxide, which can impact the flavor of brewed coffee.

The degassed fine-ground roasted beans can be understood that it is ready to be brewed after removing the released gases. For instance, the degassed fine-ground roasted beans are dropped into a container (e.g. a cup or a porta filter).

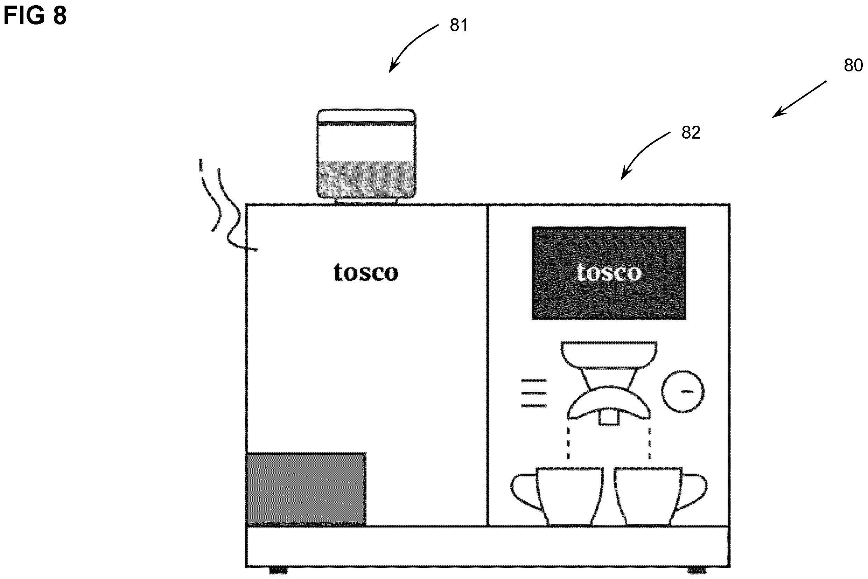

**Figure 8** illustrate a schematic diagram of a coffee machine 80. The coffee machine 80 comprises a coffee preparation apparatus 81. The coffee preparation apparatus 81 is configured to receive coarse pre-ground to receive coarse pre-ground (PG) green coffee beans and output degassed fine-ground roasted beans using the PG beans. The coffee machine 80 further comprises a coffee brewing apparatus 82 configured to brew a coffee using the degassed fine-ground roasted beans. The coffee machine 80 comprises a reception section 82a to receive the degassed fine-ground roasted beans. The coffee machine 80 further comprises a water section 82b to supply water for brewing, a boiling section 82c to heat the water for brewing, and a pressure section 82d to generate pressure to the heated water through the degassed fine-ground roasted beans to brew the coffee from the said beans. For illustrative purposes, the reception section 82a, the water section 82b, the boiling section 82, the pressure section 82d, and the container 82e are not presented in Figure 8.

In an embodiment, the coffee brewing apparatus 82 may further comprise a container 82e to receive the brewed coffee from the pressure section 82d. For instance, the container 82e is a cup and a user can drink the brewed coffee.

In an embodiment, the coffee machine 80 further comprises a user device 83. The user device is connected to the coffee machine 80 communicatively and is configured to provide at least one coffee profile to the coffee machine 80, the coffee profile comprises a set of predefined parameters for operating the coffee preparation apparatus 81 and the coffee brewing apparatus 82. For instance, the coffee profile may be for one shot of espresso. In this context, the coffee profile comprises one dose of the PG beans (e.g. predefined weight for one shot of espresso), roasting level (e.g. roasting temperature and roasting duration), grinding condition (grinding level and grinding time), cooling condition (e.g. cooling time), brewing condition (e.g. water quantity, water temperature, and pressure).

Therefore, the coffee machine 80 can provide a brewed coffee in a time efficient manner by reducing preparation time for roasting and resting as it utilizes coarse ground green beans and removes released gases from freshly roasted beans rapidly and by streamlining multiple coffee preparation and brewing procedure within the coffee machine 80. Further, for a standard coffee machine, regardless of the performance of the machine, a quality or flavor of brewed coffee can be susceptible to degradation or oxidation of roasted coffee beans, which occurs within 2 to 4 weeks after roasting even under ideal storage conditions. However, as the coffee machine 80 directly utilizes the green beans for preparation, in which oxidation progress at a slower rate, e.g. from 6 months to a year. Therefore, the coffee machine 80 can ensure reproducible quality of brewed coffee for a longer period of time than the standard machine.

### List of references used

**A coffee preparation apparatus 1**
   holder for pre-ground green beans 2
   receiving section 3
      gate keeper 38
      dosing portion 9
         weighing scale 34
   roasting section 4
      roasting chamber 10
         air inlet 10a
         outlet 10b
         temperature sensor 20
      air circulator 12
         roasting chamber inlet valve 12b
      electric heater 14
      roasting chamber outlet valve 16
         connection point 23
         stopper 25
      coffee collector cyclone 18
      chaff collector cyclone 22
      chaff container 24
      smoke handling element 42
   grinding section 5
      grinder 26
      motor 28
   degassing section 6
      vacuum pump 30
      degassing chamber 32
   control system 7
      power supply 11
      controller unit 13
      switching circuit 15
      sensor 17
      communication unit 19
      user interface 21
   container 9
Coffee beans 50
   coarse pre-ground green beans (PG beans) 50a
   selected dose of coarse pre-ground green beans (selected PG beans) 50b
   roasted selected dose of coarse pre-ground green beans (RC beans) 50c
   cooled roasted selected dose of coarse pre-ground green beans (cooled RC beans) 50d
   fine-ground cooled roasted beans (FG beans) 50e
   degassed fine-ground roasted beans (degassed FG beans) 50f
**A coffee machine 80**
   *a coffee preparation apparatus 1*
   a coffee brewing apparatus 82
      a reception section 82a
      a water section 82b
      a boiling section 82c
      a pressure section 82d
      a container 82e
   a user device 83

## Claims

1. **A coffee preparation apparatus** (1) comprising:
a receiving section (3) configured to receive coarse pre-ground (PG) green coffee beans (50a);
a roasting section (4) comprising a roasting chamber (10) and an air circulator (12) configured to drive heated air, configured to torrefy the PG beans (50a) using the heated air within the roasting chamber (10);
a grinding section (5) configured to grind the torrefied PG beans (50c); and
a degassing section (6) comprising a vacuum pump (30) configured to remove released gases from the ground torrefied PG beans (50e).

2. The apparatus of claim 1, wherein a particle size of the coarse PG beans ranges from 1,000 to 2,700 microns and a particle size of the ground torrefied PG beans (50c) ranges from 100 to 1,600 microns.

3. The apparatus of any preceding claim, wherein the roasting section (5) further comprises a roasting chamber outlet valve (16), a coffee collector cyclone (18), and a chaff collector cyclone (22), wherein the roasting chamber outlet valve (16) is configured to control a transfer of the torrefied PG beans (50c) into the coffee collector cyclone (18) and a transfer of by-product of the roasting section (4) into the chaff collector cyclone (22), wherein the by-product comprises at least one of a portion of the heated air, released gases from the PG beans (50a), or chaff (59) separated from the PG beans (50a).

4. The apparatus of the preceding claim, wherein the air circulator (12) is configured to lift the by-product of the roasting section (4) into the chaff collector cyclone (22), or wherein the air circulator (12) is configured to lift the torrefied PG beans into the coffee collector cyclone (18).

5. The apparatus of any preceding claim, wherein the air circulator (12) comprises a roasting chamber inlet value (12b) configured to control a flow of the cooler air into the roasting chamber (10) or into a coffee collector cyclone (18) to cool down the torrefied PG beans.

6. The apparatus of any preceding claim, wherein the roasting chamber (10) comprises a plurality of air inlets (10a) through which the heated air enters the roasting chamber (10).

7. The apparatus of any preceding claim, wherein the roasting chamber (10) comprises a tubular cavity, the tubular cavity is configured to induce a disturbance in circulation of the heated air.

8. The apparatus of claim 3, wherein the chaft collector cyclone further comprises a chaff output (22b) and a chaff container (24), wherein the chaff outlet (22b) configured to drop the chaff (59) into the chaff container (24).

9. The apparatus of any preceding claim, wherein the receiving section (3) comprises a dosing portion (9) comprising a weighing scale (34) configured to measure weight of the PG beans (50a) in the dosing portion (9).

10. The apparatus of any preceding claim, wherein the apparatus (1) further comprises a hopper (2) configured to load the PG beans, wherein the hopper (2) is connected to the receiving section (3).

11. The apparatus of any preceding claim, wherein the apparatus includes a control system (7) comprising:
a controller unit (13) configured to execute the preprogramed instruction to operate the apparatus;
a switching circuit (15) configured to control signals transmitted to the receiving section (3), the roasting section (4), the grinding section (5), and the degassing section (6) based on signals from the controller unit (13); and
a user interface (21) configured to receive a user input to provide at least one parameter to the pre-programmed instruction or a coffee preparation profile.

12. **A method for coffee preparation,** comprising:
providing a coffee preparation apparatus according to any preceding claim,
receiving coarse pre-ground (PG) green beans in the coffee preparation apparatus;
torrefying the PG beans using heated air;
grinding the roasted PG beans to fine ground coffee beans; and
degassing the fine ground beans using a vacuum pump.

13. The method of the preceding claim including separating by-product of torrefaction during the torrefying step, wherein the by-product comprises at least one of a portion of the heated air or released gases or chaff from the PG beans.

14. The method of either of the two directly preceding claims further comprising actively cooling the roasted PG beans with ambient pumped air immediately after torrefaction.

15. **A coffee machine (80),** comprising:
a coffee preparation apparatus (1) according to any preceding claim configured to receive coarse pre-ground (PG) green coffee beans and output degassed fine-ground roasted beans using the PG beans; and
a coffee brewing apparatus (82) configured to brew a coffee using the degassed fine-ground roasted beans, wherein the coffee brewing apparatus comprises
a reception section (82a) to receive the degassed fine-ground roasted beans;
a water section (82b) to supply water for brewing;
a boiling section (82c) to heat the water for brewing; and
a pressure section (82d) to generate pressure to the heated water through the degassed fine-ground roasted beans to brew the coffee from the said beans.
